# EUROPEAN PATENT SPECIFICATION

(11) **EP 4 039 348 B1**
(45) Date of publication and mention of the grant of the patent: **07.06.2023**
(21) Application number: 21155031.4
(22) Date of filing: 03.02.2021
(51) Int. Cl.: B01D 1/18, B01J 2/04, B04B 11/00, F26B 3/12, G01N 1/00

(54) **DEVICE FOR CONTINUOUS SPRAY DRYING WITH VARIABLE INLET COMPOSITION, METHOD FOR CONTINUOUS PRODUCTION OF MULTI-COMPONENT POWDERS BY SPRAY DRYING AND USE THEREOF**
VORRICHTUNG ZUR KONTINUIERLICHEN SPRÜHTROCKNUNG MIT VARIABLER EINTRITTSZUSAMMENSETZUNG, VERFAHREN ZUR KONTINUIERLICHEN HERSTELLUNG VON MEHRKOMPONENTENPULVERN DURCH SPRÜHTROCKNUNG UND DEREN VERWENDUNG
DISPOSITIF DE SÉCHAGE CONTINU PAR PULVÉRISATION À COMPOSITION D'ENTRÉE VARIABLE, PROCÉDÉ DE PRODUCTION CONTINUE DE POUDRES MULTI-COMPOSANTS PAR SÉCHAGE PAR PULVÉRISATION ET UTILISATION ASSOCIÉE

(43) Date of publication of application: 10.08.2022
(73) Proprietor: Vysoká skola chemicko-technologická v Praze, 16628 Praha 6 - Dejvice (CZ)
(72) Inventor: Klimsa, Vojtech, Terlicko (CZ); Ruphuy Chan, Gabriela, 18000 Praha 8, Liben (CZ); Stepanek, Frantisek, 14200 Praha 4 (CZ); Kaspar, Ondrej, 36018 Tasovice Karlovy Vary (CZ)
(74) Representative: Hartvichova, Katerina

(56) References cited:
- WO-A1-03/037303
- CN-A- 111 457 676
- CN-U- 208 818 531
- CN-U- 209 406 608
- US-A1- 2018 104 618
- US-A1- 2019 232 305

## Description

### Field of Art

The present invention relates to a method for a fast, continuous, automated and highly efficient production of multi-component powders by spray drying. The method can be applied to already existing spray dryers available in the market and enables the automated production of multiple samples with variable composition in continuous mode. The present invention further relates to an automated device adaptable to spray drying equipment for screening purposes, suitable for performing the above method.

### Background Art

Spray drying is a well-established method commonly used in the chemical, food, and pharmaceutical industries for producing a dry powder from a liquid phase, and it plays an important role in product development. In recent years, increased access to and familiarity with spray drying equipment has enabled formulation scientists to include spray-dried dispersions (SDDs) early in compound screening and drug development. The main drawback of spray dryers currently used for product screening and development purposes is that being a batch process, the production of multiple samples is very time consuming. With currently available spray-drying set-up, the user is forced to stop the spray drying process between samples with different composition. Particularly when operated under inert atmosphere, the process has to be completely stopped and then re-started each time the sample collection vessel is exchanged.

A typical example, in which spray drying is used for screening, is in the pharmaceutical industry for the formulation of amorphous solid dispersions (ASD). Often, samples with different compositions are produced, including ternary systems consisting of two different excipients such as polymers, and one insoluble drug. The number of samples is relative, but usually 15 or more samples of various composition ratios are produced in a typical formulation screening study. With the current spray-drying set-up, this process can easily take up to a week or even longer.

Available publications are still focused on the use of spray drying in batch mode. One approach consisted in the development of a brand-new device for screening purposes. Ousset, A., et al., Comparison of a Novel Miniaturized Screening Device with Büchi B290 Mini Spray-Dryer for the Development of Spray-Dried Solid Dispersions (SDSDs). Processes, 2018, 6: p. 129, built and tested a miniaturized device for producing spray-dried dispersions. This miniaturized device works in batch mode and the powders produced exhibited different characteristics (e.g. particle size) but similar drug-polymer miscibility and morphology when compared to small-scale (laboratory) spray dryer. Another relevant publication by Klimša, V. *Continuous spray drying with variable inlet formulation* - *design and optimization* [Master Thesis]. University of Chemistry and Technology Prague, 2018, proposed the use of a pump system for the continuous feeding of three-component samples, along with a custom-made, manually operated valve that closes the system, allowing for a manual collection vessel exchange during one spray-drying run. The proposed system is not effective, since the process is still time consuming, requires the presence of an operator to open/close the valve and collect the samples, and is not suitable when operating the spray dryer in inert atmosphere (drying of samples containing organic solvents).

US 2019/0232305 A1 discloses an ultrahigh efficiency spray drying system aimed to increase the speed of spray-drying under mild temperature conditions. The disclosed system induces localized turbulences inside the device in a drying fluid flow stream. The described spray-drying device comprises an inlet pumping station, a spray dryer connected to a cyclone separator, and a filter. No cyclone cleaning mechanism is disclosed in this document.

CN 209406608 U discloses a cyclone air purifier comprising a cyclone cleaning mechanism designed to unclog the bottom of the cyclone by several air pipes located in the tube for the solid product, wherein the pipes may change the direction of move of the compressed air, thereby unclogging the bottom of the cyclone.

CN 208818531 U discloses an automatic tubular ash sampler for automatic sampling machine with a discharge valve located between the cyclone separator and the sample collector. The dust sample collected in the material pipe is discharged into the sample collection machine at the discharge valve of the gas separator, and then the sample collection machine transfers the powder ash sample to the corresponding sample collection tank.

### Disclosure of the Invention

The method of the present invention and the apparatus thereof, represent a new, highly efficient, and automatized way of producing spray-dried powders with systematically variable composition or particle properties in a continuous mode, with minimal cross-contamination between samples, and minimal human assistance. This new method overcomes the drawbacks of the background art, while speeding up the production by 5 times or more, reducing costs, reducing human assistance, and reducing time-to-market of new formulations.

The object of the present invention is a device for continuous spray drying with variable inlet composition, comprising:
- an inlet pumping station, the inlet pumping station comprising
   a mixer, the mixer having a plurality of ports, the mixer being preferably a flow-through static mixer, and
   a plurality of dosing pumps configured to being attached to stock solutions of individual components and/or solvents via plurality of ports and via tubing, the dosing pumps being configured to measure the exact quantity of liquid components; the dosing pumps being connected to the mixer; each of the dosing pumps may be connected to the desired reservoir of liquid component via tubing (intake connection) and a desired flow rate of the liquid component may be delivered by the dosing pump to the mixer (outlet connection); after exiting the mixer, the mixture of the liquid components in a desired ratio is lead via tubing towards the spray dryer nozzle;
- a spray dryer comprising a spray dryer nozzle, a heating coil, a drying chamber, the spray dryer nozzle being connected to the mixer of the inlet pumping station via tubing; and to a source of drying gas;
- a cyclone separator connected to the outlet of the drying chamber of the spray dryer;
- a filter for filtering the drying gas leaving the cyclone separator, connected to a gas dehumidifier and/or a vapour condenser;
- a cyclone cleaning mechanism comprising a first connection piece for bridging the drying chamber and the cyclone separator; a second connection piece for bridging the cyclone separator and the filter of the spray dryer; and a gas terminal valve coupled to each connection piece via tubing; the gas valve allows pressurized gas (air or inert gas, preferably the drying gas) to enter the cyclone via the connection pieces, continuously or in pulses, by manually or automatically opening a gas terminal valve; the gas terminal valve being connected to the control device; and wherein the first and second connection pieces are configured to direct pressurized gas into the cyclone;
wherein the first connection piece comprises an inlet for the pressurized gas that serves to direct the gas tangentially into the cyclone and, preferably, further comprises a temperature sensor; and wherein the second connection piece comprises an inlet for the pressurized gas that serves to direct the gas axially into the cyclone;
- a slide valve configured to separate the cyclone separator from a sample collection vessel; the slide valve comprising:
   - a barrier with an aperture, configured to switch between an open position (for connecting the cyclone separator to the sample collection vessel during spray drying), and a closed position (for closing the system between the sample collection vessel and the cyclone separator),
   - a switching means for switching the barrier between the open position and the closed position, the switching means being preferably a motor or a pneumatic cylinder that uses pressurized gas to slide the barrier to the opened or closed positions,
   - at least two seals positioned between the cyclone separator and the slide valve and between the slide valve and the sample collection vessel, suitable for joining the parts together and to guarantee the airtightness of the system;
- an autosampler for placing a plurality of sample collection vessels, the autosampler being configured to lift/lower the sample collection vessels one by one into/from the slide valve; preferably the autosampler comprising:
   - a plurality of sample collection vessels;
   - a carousel for carrying the plurality of sample collection vessels, the carousel being rotated by a motor to allow the exchange of sample collection vessels; the motor driving the carousel allows the carousel to rotate in a stepped motion, which allows each of the sample collection vessels to be lifted (e.g. by a second motor or a pneumatic cylinder) to the valve; instead of a rigid circular carousel, a carousel conveyor belt might be used for carrying the sample vessels;
   - optionally, a weighting scale configured to measure and record the weight of the vessels before and after sample collection; the weighting scale being preferably incorporated in the carousel;
   - optionally, a sample identification and labelling system, the sample identification and labelling system being configured to uniquely identify each sample collection vessel and match it with the corresponding liquid inlet composition.
- a control device connected to the inlet pumping station, the cyclone cleaning mechanism, the slide valve, and the autosampler.

In one preferred embodiment, the first connection piece of the cyclone cleaning mechanism comprises an inlet for the pressurized gas that serves to direct the gas tangentially into the cyclone, and a temperature sensor.

In one preferred embodiment, the second connection piece of the cyclone cleaning mechanism comprises an inlet for the pressurized gas that serves to direct the gas axially into the cyclone.

The pressurized gas is therefore introduced into the cyclone, manually or automatically, via the first and/or second connection piece. The inlets are designed so that the pressurized gas enters in direction to the cyclone, removing the particles which are loosely attached to the cyclone walls. The use of the cleaning mechanism is optional but convenient, especially for certain types of samples, which tend to attach to the inside of cyclone walls.

In one embodiment, the slide valve is automated and configured to switch from open to close position and vice versa upon receiving a signal from the control device, thus without any need of human assistance; preferably, the switching means of the slide valve is selected from a motor or a pneumatic cylinder, the pneumatic cylinder being configured to use pressurized gas to slide the barrier to the open or closed position.

In one embodiment, the autosampler comprises a carousel for carrying the plurality of sample collection vessels, the carousel being rotated by a motor to allow the exchange of sample collection vessels; and, optionally, a weighting scale configured to measure and record the weight of the vessels before and after sample collection.

In one embodiment, the device further comprises an analyser for simultaneous analysis of the collected spray-dried samples, the analyser being connected to the control device and to the autosampler. Preferably, the analyser is selected from the group comprising a dissolution testing means, UV-Vis spectrophotometer, HPLC, X-ray spectrometer, mass spectrometer, NMR spectrometer, Raman spectrometer.

In one preferred embodiment, the device for continuous spray drying with variable inlet composition comprises a dissolution testing means as the analyser, used for simultaneous dissolution testing of the collected spray-dried samples, the dissolution testing means being connected to the control device and to the autosampler. The dissolution testing means comprises:
- a collection vessel rack configured to arrange the collection vessels transferred directly from the autosampler;
- a dissolution medium dispenser configured to add an exact quantity of dissolution medium to each vessel in the collection vessel rack;
- a detecting means for detection of the dissolved sample, for example a UV-Vis spectrophotometer or sampling device for HPLC analysis, the detecting means being configured to measure all the samples in the collection vessel rack simultaneously or in a desired sequence.

In a preferred embodiment, the detecting means of the dissolution testing means is selected from the group comprising UV-Vis spectrophotometer, HPLC, X-ray spectrometer, mass spectrometer, NMR spectrometer, Raman spectrometer.

In yet another preferred embodiment, the device for continuous spray drying with variable inlet composition further comprises as the analyser a means for solid-state particle characterization of the collected spray-dried samples, the solid-state particle characterization means being connected to the control device and to the autosampler. The solid-state particle characterization means comprises:
- a detecting means for detecting the chemical composition of the samples, for example Raman and/or Near Infra-Red spectrophotometer equipped with a fiber-optic probe;
- a detecting means for detecting the physical form of the samples, for example a video microscopy inspection probe;
- a positioning means for positioning the sample collection vessels to a desired distance and orientation with respect to each detecting means.

Every part of the system is controlled by a computer program specifically constructed for the presented device. The input data comprise a number of components to be spray dried with specific sample compositions, the total inlet feed flowrate, total volume per sample, number of samples, partial inlet feed flowrate, drying time and cleaning time.

The device according to the present invention is capable of continuous spray drying of various mixed samples (e.g. samples with different components and different ratio of their components) without the necessity of stopping the spray drying process between each sample composition change. The software also allows the operator to interrupt the process at any time and perform the particular step manually, if needed.

Another object of the present invention is a method for continuous production of multi-component powders by spray drying, comprising the following steps:
i) providing the device according to the present invention; solutions to be spray dried shall be prepared in storage containers, which shall be connected to the inlet pumping station via tubing; preferably, at least one of the storage containers comprises a pure solvent; a clean collection vessel is placed in the autosampler and connected to the slide valve;
ii) the input data are provided to create a spray drying protocol by the control device; the input data are selected from the group comprising number of components, sample compositions, total and partial inlet feed flowrate, total volume per sample, number of samples, drying time, cleaning time;
iii) optionally, the input data are provided to create a cyclone cleaning protocol by the control device; the input data being selected from the group comprising continuous or pulse mode of the pressurized gas inlet via first and second connection piece; pulse sequence (in particular number of pulses, pause between the pulses, pulse duration); interval between pulse sequences; tangential and/or axial direction of the pressurized gas inlet;
iv) the slide valve is switched into an open position and the inlet pumping station retrieves a spray drying protocol (comprising input data, such as the number of components to be spray-dried with specific sample compositions, the total inlet feed flowrate, total volume per sample, number of samples, partial inlet feed flowrate, drying time and cleaning time) from the control device, pumps the desired quantity of each storage solution into the mixer and the mixer dispenses a measured quantity of the solution mixture to be spray dried into the spray-dryer nozzle;
v) the solution mixture is spray dried during a predetermined drying time according to the spray drying protocol;
vi) the inlet pumping station stops pumping the storage solutions into the mixer, and starts pumping the pure solvent into the mixer, which dispenses a measured quantity of the pure solvent into the nozzle during a predetermined cleaning time according to the spray drying protocol; the flowrate of the solvent is preferably identical to that of the original mixed solution in order to maintain constant evaporation rate in the spray dryer and avoid temperature fluctuations;
vii) optionally, pressurized gas enters the cyclone via the gas valve and the first and/or second connection pieces, during a predetermined drying time; optionally, this step is preceded by retrieving the cyclone cleaning protocol by the gas valve; the pressurized gas then enters the cyclone via the first and/or second connection piece during a predetermined drying time according to the cyclone cleaning protocol;
viii) the inlet pumping station stops pumping the pure solvent into the mixer, and the slide valve closes;
ix) the collection vessel containing the spray dried sample is disconnected from the slide valve, and the autosampler moves by one position to place and connect a clean collection vessel to the slide valve;
x) optionally, the spray dried sample from the collection vessel is analyzed using the analyser;
xi) repeating steps iv) to x) until all desired samples are spray dried.

In one embodiment of the method, the device in step i) comprises the dissolution testing means as the analyser, according to one embodiment of the present invention, for simultaneous dissolution testing of the collected spray-dried samples,
and in the step x) each collection vessel containing the spray dried sample is transferred to the collection vessel rack, the dissolution medium dispenser adds an exact quantity of dissolution medium to each collection vessel in the collection vessel rack; and the detecting means measures the quantity of the dissolved sample in each of the collection vessel in the collection vessel rack.

In yet another embodiment of the method, the device in step i) comprises the solid-state particle characterization means as the analyser, and in the step x) each collection vessel containing the spray dried sample is positioned so that the solid-state particle characterization means measures the solid-state characteristics, e.g. Raman and/or Near Infra-Red spectra of the sample, and/or obtains a microscopy image of the sample.

The advantage of the present invention is in providing a device that comprises an inlet pumping station, a cleaning mechanism for the cyclone, a valve adaptable to the cyclone, a sample collector, a simultaneous dissolution testing means or a solid-state particle characterization means, and an automatic control system for the whole apparatus.

The inlet pumping station consists of a series of pumps connected to a mixer that enables the combination of two or more solutions or suspensions, to produce multicomponent samples. The inlet pumping station can also be used to produce multiple one-component samples. The mixer can be connected to any spray-dryer nozzle using standard tubing. In one preferred embodiment, the feeding rate can be varied between 0.1 and 50 millilitres per minute.

It has been determined that the cyclone separator is the major source of sample cross-contamination due to accumulation of particles in the cyclone walls. The cyclone cleaning mechanism enables the reduction of cross-contamination between samples by introducing pressurized gas tangentially and/or axially into the cyclone separator, enabling the detachment of loosely attached particles from the cyclone walls. This way, the risk of collecting particles from a previous sample is significantly reduced. The cleaning mechanism can consist of, but is not limited to, a pneumatic system in which the release of pressurized gas (air or inert gas such as nitrogen) promotes the release of the particles loosely attached to the walls of the cyclone.

The slide valve allows closing the system while exchanging the sample collector vessels. Closing the system is highly important since it allows the production of samples without having to shut down the spray dryer. This way, the spray drying conditions can be kept constant, including temperature, pressure drop and gas concentration, which is particularly significant in the case of using inert gas for spray drying solutions/suspensions with organic solvents. The slide valve is fitted at the cyclone outlet with the aid of seals to guarantee airtightness in the system.

The samples are continuously collected into standard collection vessels that are exchanged automatically. The autosampler preferably includes a capping system to close the vessels right after the sample was collected so no dust, moisture or other unwanted materials contaminate the sample. The autosampler has a capacity for collection of preferably 20 or more samples. The autosampler is configured to that not all sample positions need to be occupied at all time.

The collected samples can be transferred to a dissolution testing means for the simultaneous dissolution testing of the samples.

The collected samples can be transferred to a solid-state particle characterization means for the chemical composition and physical form analysis of the samples.

Another object of the present invention is a computer program comprising instructions to cause the device according to the present invention to execute the steps of the method of the present invention, described above. The whole apparatus can thus be automatically controlled with the aid of this software. The user inputs the number of sample components (one or more) and the concentration of the components for each sample. The software calculates the required volumes of initial solutions, the required flow rates of each solution for a desired sample composition, and the total time of the experiment. Furthermore, the software creates the spray drying protocol and, optionally, also the cyclone cleaning protocol, used in the method of the present invention. Another object of the present invention is the use of the device according to the present invention described above for continuous spray drying, preferably in pharmaceutical industry.

Yet another object of the present invention is the use of the device or of the method according to the present invention for screening for the formulation of amorphous solid dispersions, preferably in the pharmaceutical industry.

### Brief Description of Figures

Fig. 1: Schematic representation of the automated device for continuous spray drying with variable inlet composition adaptable to small-scale spray drying equipment consisting of an inlet pumping station 1, a cyclone cleaning mechanism 2, a slide valve 3 separating the cyclone from the sample collection vessel, an autosampler 4, an analyser 5 (a simultaneous dissolution testing means), and an automatic control device 6 for the whole apparatus.
Fig. 2: Schematic representation of the inlet pumping station 1, depicting the dosing pumps 7 and the mixer 8.
Fig. 3: A - Schematic representation of the cyclone cleaning mechanism 2 for the cyclone separator, comprising a first connection piece 9, a second connection piece 10, and a gas valve 11 for pressurized gas. B - a top view of the first connection piece 9, C - a top view of the second connection piece 10.
Fig. 4: Schematic representation of a slide valve 3 separating the cyclone from the sample collection vessel, comprising a barrier 12 with an aperture, a pneumatic cylinder 13 as the switching means and two seals 14.
Fig. 5: Schematic representation of the autosampler 4, comprising a plurality of sample collection vessels 15; a carousel 16; a weighting scale 17 and a lifting mechanism 18.
Fig. 6: Schematic representation of a simultaneous dissolution testing means, depicting a collection vessel rack 19, a dissolution medium dispenser 20, a detecting means 21.
Fig. 7: Algorithm for the automatic control of the system.
Fig. 8: Ternary diagram of the samples produced in Example 2.
Fig. 9: Dissolution kinetics of samples 11 to 15, evaluated using a standard dissolution apparatus VanKel VK 7000, produced according to Example 3.
Fig. 10: Morphology of the particles produced in Example 3, evaluated by Scanning Electron Microscopy (SEM) using a Tescan Vega 3 microscope.
Fig. 11: X-ray diffraction, evaluating the crystallinity of samples from Example 3, using a PANaytical X'Pert PRO with High Score Plus diffractometer.
Fig. 12: Dissolution kinetics of samples produced using the simultaneous dissolution testing means, according to Example 4.
Fig. 13: Particle sizes of the samples produced according to Example 5.
Fig. 14: Dissolution kinetics of the samples with the largest and smallest particle sizes, produced according to Example 5.
Fig. 15: Evaluation of sample cross-contamination and spray drying yield of the samples produced according to Example 6.

### Examples

The invention is further illustrated by, but not limited to, specific examples.

### Example 1 - Device for continuous spray drying with variable inlet composition

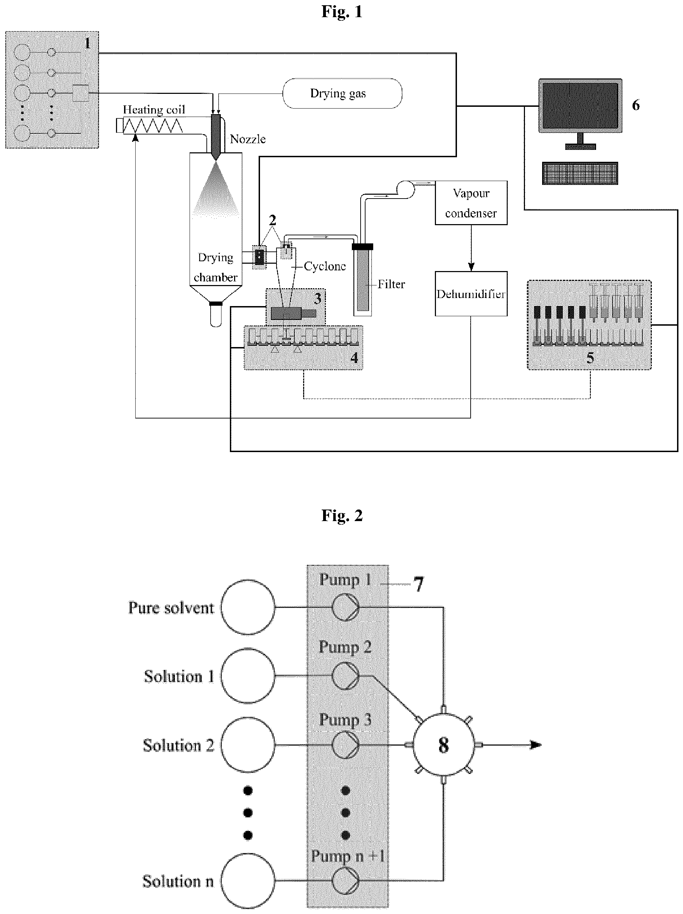

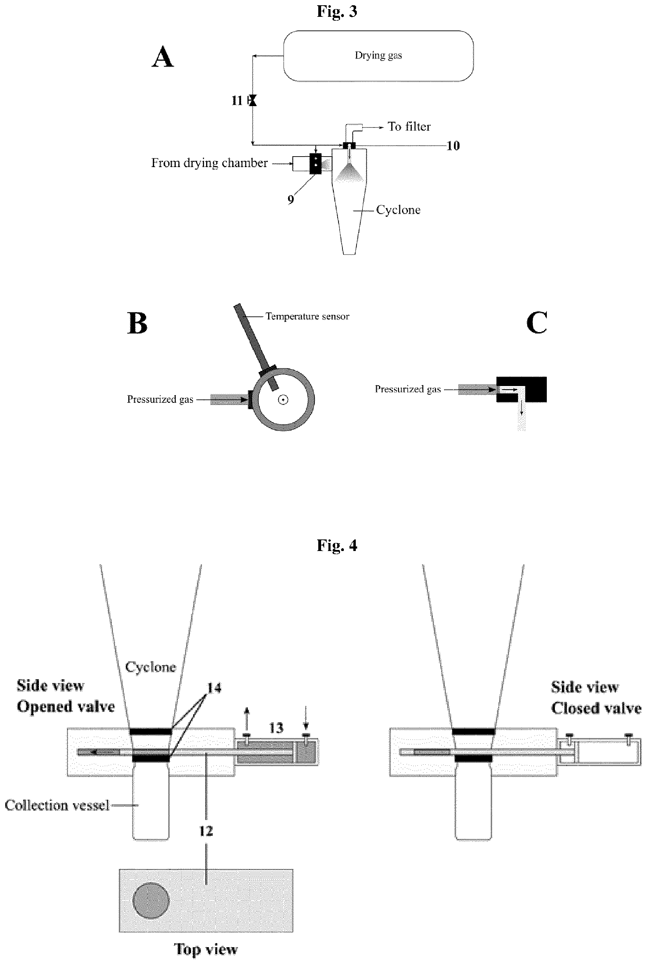

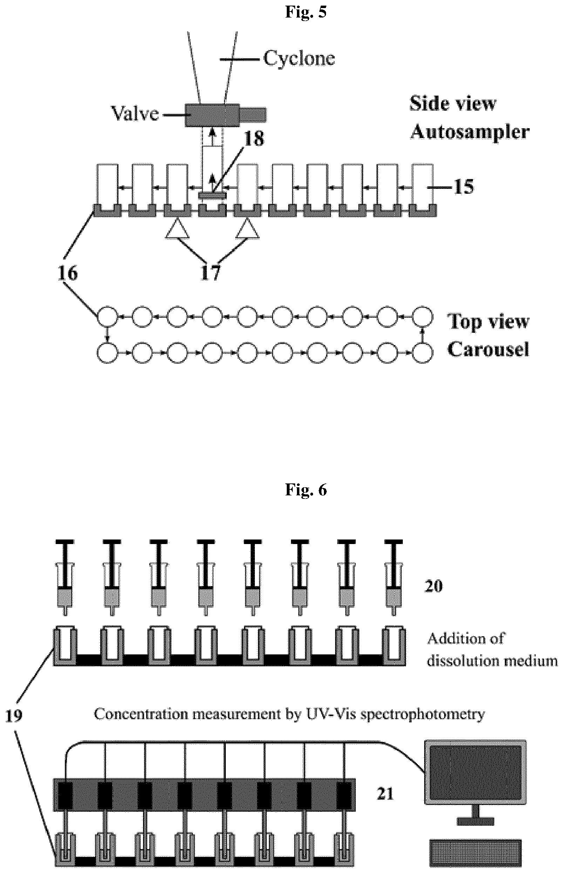

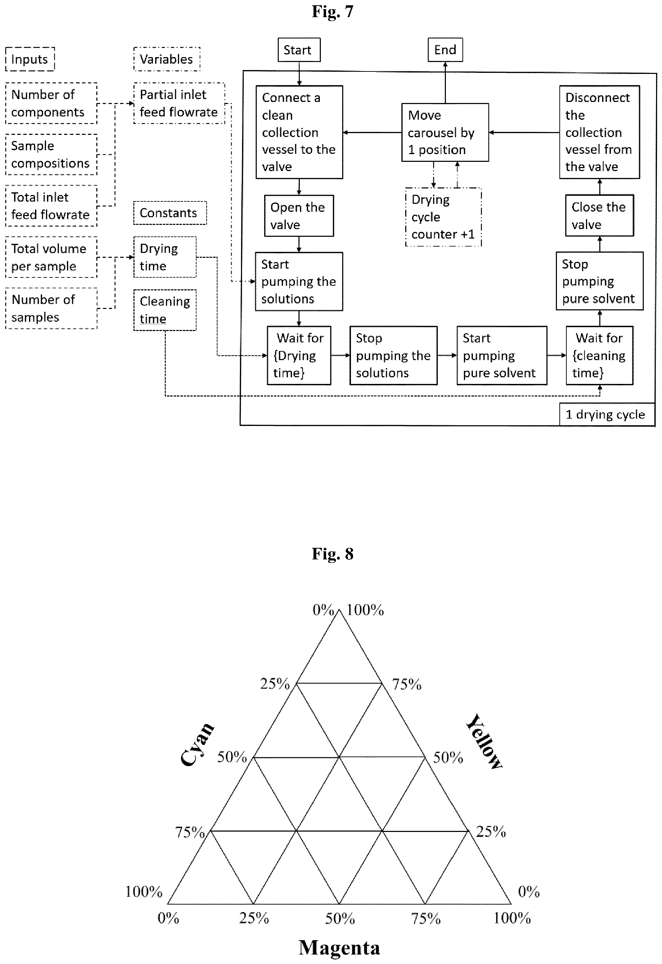

A device for continuous spray drying with variable inlet composition was constructed according to Fig. 1. It consisted of an inlet pumping station 1 (Fig. 2), a cleaning mechanism 2 for the cyclone (Fig. 3), a slide valve 3 adaptable to the cyclone (Fig. 4), an autosampler 4 (Fig. 5), a simultaneous dissolution testing means as the analyser 5 (Fig. 6), and an automatic control device 6 for the whole apparatus (a computer). The control device was operated by a computer program with the algorithm shown in Fig. 7.

The first and second connection pieces 9 and 10 were made from stainless steel.

The slide valve 3 is depicted in Fig. 4. The material of the slide valve 3 was aluminium (EN AW 5083), the barrier 12 was made of stainless steel (DIN 1.4301), a pneumatic cylinder 13 was used as the switching means for switching the barrier 12 between the open position and the closed position. The pneumatic cylinder 13 was operated by the control device 6. The two seals 14 were made from rubber (50°Sh NBR).

The spray-dryer used was a commercial Mini Spray Dryer B-290 from Büchi, the drying gas used was air or N₂.

Solutions of the pure components in predetermined concentrations were prepared. For a ternary system, for example, aqueous solutions comprising a drug, a polymer A and a polymer B were used. Additionally, a flask with a pure solvent (water) was prepared.

The desired sample compositions were set by the user at the beginning of the experiment. The user inputs the sample compositions, total and partial inlet feed flowrate, total volume per sample, number of samples, drying time, cleaning time, continuous or pulse mode of the pressurized gas inlet via first and second connection piece 9, 10; tangential and/or axial direction of the pressurized gas inlet, into the computer program of the control device 6, which calculated the required flow rates for each sample, and created the particular spray-drying protocol and cyclone cleaning protocol. Once the user checked the data and run the program, the spray-drying protocol was retrieved by the inlet pumping station 1, the slide valve 3 was switched into an open position, and the solutions were pumped into the spray dryer in the predetermined volumes using the inlet pumping station 1 according to the spray-drying protocol.

For a desired sample composition, the three solutions (in the case of a ternary system) were simultaneously pumped in appropriate flow rates into the mixer 8 and from the mixer into the spray dryer nozzle via standard tubing.

After the predetermined drying time, the inlet pumping station 1 stopped pumping the storage solutions into the mixer 8, and started pumping the pure solvent into the mixer, which dispensed a measured quantity of the pure solvent into the nozzle during a predetermined cleaning time according to the spray drying protocol;
The pure solvent was pumped into the spray dryer only in between the samples with the purpose of cleaning the tubes and reducing the sample cross-contamination.

Cross-contamination between samples can be reduced by manually or automatically introducing pressurized gas (air or inert gas such as nitrogen), using the cyclone cleaning mechanism 2. For the automated cyclone cleaning, the cyclone cleaning protocol was retrieved by the gas valve 11, and pressurized gas entered the cyclone via the connection pieces 9 and 10, during a predetermined drying time according to the cyclone cleaning protocol.

Once the cyclone cleaning was finished, the inlet pumping station 1 stopped pumping the pure solvent into the mixer, the slide valve 3 closed, and the collection vessel 15 containing the spray dried sample was disconnected from the slide valve 3, and the autosampler 4 moved by one position to place and connect a clean collection vessel 15 to the slide valve 3.

The three-component sample was spray dried and collected through the cyclone separator into a sample collection vessel 15. During sample collection, the slide valve 3 was in opened position. Once the sample was collected, the slide valve 3 closed the system, and the collection vessels were exchanged using the autosampler 4 for the collection of the next sample. Simultaneously, pure solvent was being pumped into the system.

Additionally, after sample collection, the vessels can be transferred to the dissolution testing means for simultaneous dissolution testing, or to a different analyser 5 for further sample analysis.

**Example 2** - *Production of ternary samples under air atmosphere.*

Total number of samples produced: 15.

Total volume spray dried: 0.75 L.

Production time: 4.43 h.

Ternary samples consisting of dyed lactose powder were prepared by spray drying using the method and apparatus described in Example 1 of the present invention. For that, three aqueous solutions of 5 wt.% lactose were prepared and 600 µL of printer dye (cyan, magenta or yellow) were added to 300 ml of each solution. The samples were spray dried using a Mini Spray Dryer B-290 from Büchi operated under air atmosphere and equipped with an ultrasonic package (ultrasonic nozzle and controller). The operating conditions consisted of 140 °C inlet temperature, 1.8 W power outlet at nozzle, and a total feed rate of 5.0 mL/min. The outlet temperature was 70 °C. To produce the samples with the compositions according to the ternary diagram (Fig. 8), the three dyed lactose solutions were pumped into the spray dryer using the inlet pumping station 1 at the flow rates shown in Table 1:

**Table 1:**

| Sample | Composition [w/w %] | | | Flow rate [mL/min] | | |
|---|---|---|---|---|---|---|
| | Cyan | Magenta | Yellow | Cyan | Magenta | Yellow |
| 1 | 100 | 0.00 | 0.00 | 5.00 | 0.00 | 0.00 |
| 2 | 75.0 | 25.0 | 0.00 | 3.75 | 1.25 | 0.00 |
| 3 | 50.0 | 50.0 | 0.00 | 2.50 | 2.50 | 0.00 |
| 4 | 25.0 | 75.0 | 0.00 | 1.25 | 3.75 | 0.00 |
| 5 | 0.00 | 100 | 0.00 | 0.00 | 5.00 | 0.00 |
| 6 | 0.00 | 75.0 | 25.0 | 0.00 | 3.75 | 1.25 |
| 7 | 25.0 | 50.0 | 25.0 | 1.25 | 2.50 | 1.25 |
| 8 | 50.0 | 25.0 | 25.0 | 2.50 | 1.25 | 1.25 |
| 9 | 75.0 | 0.00 | 25.0 | 3.75 | 0.00 | 1.25 |
| 10 | 50.0 | 0.00 | 50.0 | 2.50 | 0.00 | 2.50 |
| 11 | 25.0 | 25.0 | 50.0 | 1.25 | 1.25 | 2.50 |
| 12 | 0.00 | 50.0 | 50.0 | 0.00 | 2.50 | 2.50 |
| 13 | 0.00 | 25.0 | 75.0 | 0.00 | 1.25 | 3.75 |
| 14 | 25.0 | 0.00 | 75.0 | 1.25 | 0.00 | 3.75 |
| 15 | 0.00 | 0.00 | 100 | 0.00 | 0.00 | 5.00 |

### Determination of sample composition and cross-contamination

The composition of the samples produced was evaluated using a TECAN Infinite M200Pro spectrophotometer. A known mass of each spray-dried sample was dissolved in demineralized water and the absorbance of the resulting solutions was measured in the 300 to 800 nm range. The absorption peaks of cyan, magenta and yellow were evaluated at 613, 523, and 380 nm, respectively. Measurements were done per triplicate.

Considering that the absorbance increases linearly with the concentration of dye, the absorption spectra of each sample was compared to the absorption spectra of control solutions of the particular pure dye. The composition of each sample was determined as the absorbance of dye in the sample, evaluated in the respective characteristic peak, divided by the absorbance of the corresponding control. The experimental compositions obtained for each sample, as well as the deviation from the desired compositions, are presented in Table 2:

**Table 2:**

| Sample | Composition [w/w %] | | | Deviation [%] |
|---|---|---|---|---|
| | Cyan | Magenta | Yellow | |
| 1 | 100 | 0.00 | 0.00 | 0.00 |
| 2 | 73.5 | 26.5 | 0.00 | 1.5 |
| 3 | 50.3 | 49.7 | 0.0 | 0.3 |
| 4 | 25.9 | 74.1 | 0.0 | 0.9 |
| 5 | 0.0 | 100 | 0.00 | 0.00 |
| 6 | 0.0 | 73.9 | 26.1 | 1.1 |
| 7 | 24.9 | 49.7 | 25.4 | 0.3 |
| 8 | 47.3 | 29.3 | 23.4 | 2.8 |
| 9 | 73.4 | 0.00 | 26.6 | 1.6 |
| 10 | 49.2 | 0.00 | 50.8 | 0.8 |
| 11 | 24.5 | 26.9 | 48.6 | 1.3 |
| 12 | 0.00 | 50.7 | 49.3 | 0.7 |
| 13 | 0.00 | 26.4 | 73.6 | 1.4 |
| 14 | 24.5 | 0.00 | 75.5 | 0.5 |
| 15 | 0.00 | 0.00 | 100 | 0.00 |

The average deviation from the theoretical composition of the samples was 1.1 ± 0.7 %, which can be considered sufficiently low for high-throughput screening purposes. This result shows that it is possible to produce multiple spray-dried samples in continuous mode and with minimal cross-contamination, using the method and apparatus of the present invention under air atmosphere.

**Example 3** - *Preparation of ternary samples under inert atmosphere.*

Total samples produced: 20.

Total volume spray dried: 2 L.

Production time: 7.93 h.

Ternary samples consisting of an active compound (drug) ibuprofen, and polymers polyvinyl caprolactam-polyvinyl acetate-polyethylene glycol graft copolymer (Soluplus^{®}) and polyvinylpyrrolidone (PVP), were prepared by spray drying using the method and apparatus described in Example 1. For that, a solution of each component was prepared in a concentration of 20.0 mg/mL, using ethanol as solvent. The samples were spray dried using the device according to Example 1, including a Mini Spray Dryer B-290 from Büchi operated under inert atmosphere (nitrogen) and equipped with an ultrasonic package (ultrasonic nozzle and controller). The operating conditions consisted of 120 °C inlet temperature, 1.5 W power outlet at nozzle, and a total feed rate of 5.0 mL/min. The outlet temperature was 70 °C. The three solutions were pumped into the spray dryer using the inlet pumping station 1 at appropriate flow rates to obtain the compositions shown in Table 3:

**Table 3:**

| Sample | Composition [w/w %] | | | Sample | Composition [w/w %] | | |
|---|---|---|---|---|---|---|---|
| | Ibuprofen | Soluplus | PVP | | Ibuprofen | Soluplus | PVP |
| 1 | 10.0 | 90.0 | 0.0 | 11 | 30.0 | 70.0 | 0.0 |
| 2 | 10.0 | 67.5 | 22.5 | 12 | 30.0 | 52.5 | 17.5 |
| 3 | 10.0 | 45.0 | 45.0 | 13 | 30.0 | 35.0 | 35.0 |
| 4 | 10.0 | 22.5 | 67.5 | 14 | 30.0 | 17.5 | 52.5 |
| 5 | 10.0 | 0.0 | 90.0 | 15 | 30.0 | 0.0 | 70.0 |
| 6 | 20.0 | 80.0 | 0.0 | 16 | 40.0 | 60.0 | 0.0 |
| 7 | 20.0 | 60.0 | 20.0 | 17 | 40.0 | 45.0 | 15.0 |
| 8 | 20.0 | 40.0 | 40.0 | 18 | 40.0 | 30.0 | 30.0 |
| 9 | 20.0 | 20.0 | 60.0 | 19 | 40.0 | 15.0 | 45.0 |
| 10 | 20.0 | 0.0 | 80.0 | 20 | 40.0 | 0.0 | 60.0 |

### Dissolution kinetics

The dissolution kinetics of selected ternary mixtures were measured using the dissolution apparatus VanKel VK 7000 (mini-paddle), which complies with USP 2 specifications. The dissolution test was performed in 200 mL of Certipur^{®} Buffer solution (pH 2.00 at 25°C) at 37 ° C and stirring of 150 rpm.

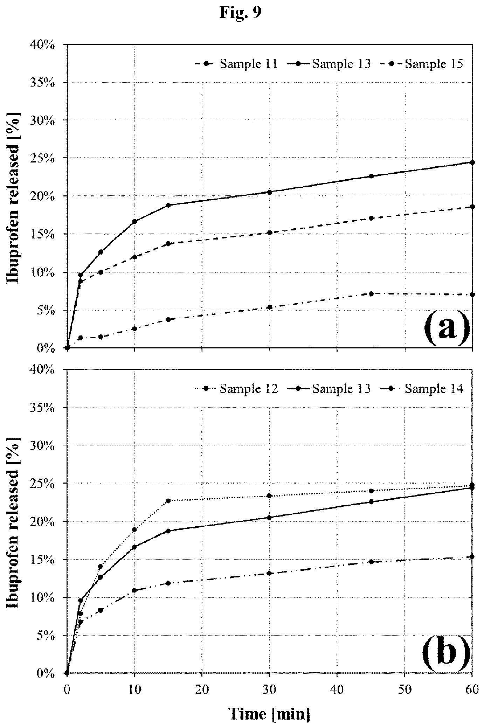

Prior to loading the samples into the dissolution vessel, the ternary mixtures (powders) were mixed with a small amount (5 mL) of tempered buffer from the dissolution vessel and Tween20 in such an amount (8 mg) that the total concentration in the entire volume of dissolution medium (200 mL) was below the critical micellar concentration (60 mg/L). This procedure ensured a better distribution of the powder sample in the dissolution vessel without affecting the overall solubility of ibuprofen. After loading the samples into the dissolution vessel, aliquots (0.5 mL) of the dissolution medium were taken at prescribed time intervals over a period of one hour using a 45 µm (acetate cellulose membrane) syringe filter, and then the ibuprofen concentration was measured by HPLC. The dissolution kinetics obtained are shown in Fig. 9.

The results show that considerably different dissolution kinetics are obtained depending on the composition of the samples. The fastest dissolution kinetics were obtained for the ternary sample containing both polymers, Soluplus and PVP, in a proportion 1:1 (sample 13), when compared to binary samples with Soluplus (sample 11) or PVP (sample 15) (Fig. 9a). In fact, even faster dissolution kinetics were obtained for the ternary sample with Soluplus:PVP in a proportion 3:1 (sample 12), as shown in Fig 9b. This shows the beneficial effect of producing ternary samples, and the right composition between the three components can be found by effectively performing a screening using the method and apparatus of the present invention.

### Particle morphology

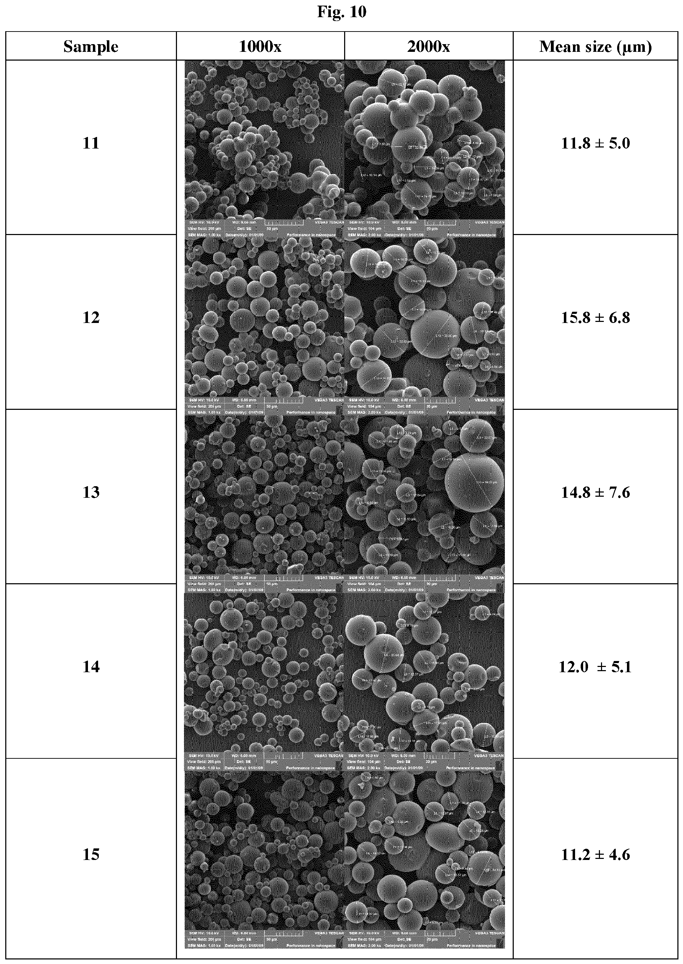

The morphology of the produced particles was evaluated by Scanning Electron Microscopy (SEM) using a Tescan Vega 3 microscope. Before the SEM analysis, the samples were coated with a 5-nm gold layer using an Emitech K550X sputter coating equipment. The SEM images of selected samples are shown in Fig. 10.

All samples exhibit spherical morphology, with particle sizes ranging between 10 to 15 µm in size. These results show that morphology and particle size of the samples are consistent, and there were no significant variations in spray drying conditions throughout the whole experiment, thus the samples differ only in their composition.

### X-Ray Diffraction

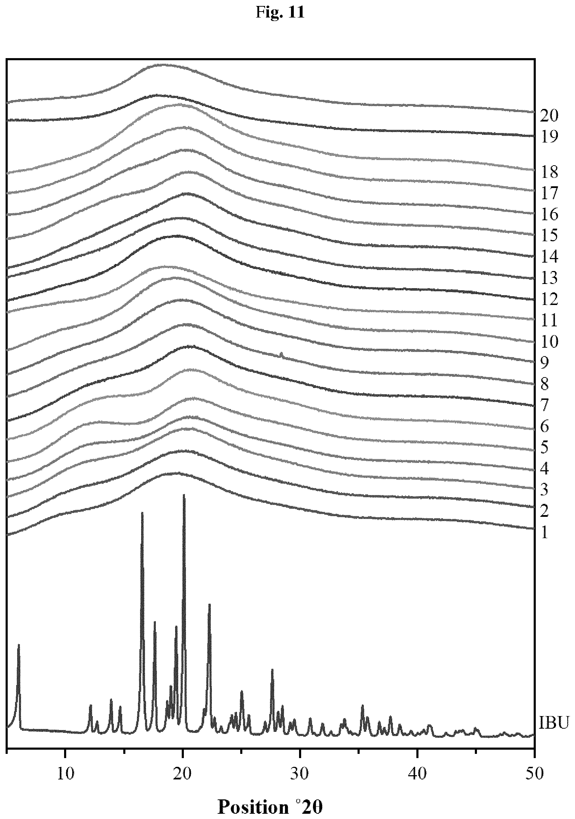

Crystallinity of the samples (Fig. 11) was evaluated by recording the diffraction intensities of the produced microparticles from 5° to 50° 2θ angle using a PANaytical X'Pert PRO with High Score Plus diffractometer.

Crystallinity of the samples can be affected either by the composition of the samples (e.g. samples with high drug content tend to have higher crystallinity), or by the residence time in the spray dryer (particles with high residence time in the spray dryer can potentially crystallize and contaminate other samples). In contrast to pure ibuprofen, all spray-dried samples were completely amorphous, proving that, within the evaluated compositions, the samples did not crystallize during spray drying using the method and apparatus of the present invention.

**Example 4** - *Production of samples with simultaneous dissolution testing.*

Total samples produced: 18.

Total volume spray dried: 0.70 L.

Production time: 2.33 h.

Samples consisting of lactose, gum arabic and 6-Carboxyfluorescein (CF), were prepared by spray drying using the method and apparatus described in Example 1 of the present invention, equipped with the simultaneous dissolution testing means as the analyser 5 (Fig. 6). A solution of each component was prepared in a concentration of 0.10 mM for 6-Carboxyfluorescein, and 25.0 mg/mL for lactose and for gum arabic, using water as solvent. The samples were spray dried using a Mini Spray Dryer B-290 from Büchi operated under air atmosphere and equipped with an ultrasonic package (ultrasonic nozzle and controller). The operating conditions consisted of 120 °C inlet temperature and 1.5 W power outlet at nozzle. The outlet temperature was 67 °C. To produce the samples, the solutions were pumped into the spray dryer using the inlet pumping station 1 at appropriate flow rates so that the combined inlet flow rate was 5.0 mL/min to obtain the compositions shown in Table 4:

**Table 4:**

| Sample | Composition [mg] | | |
|---|---|---|---|
| | Lactose | Gum Arabic | 6-Carboxyfluorescein |
| 1 | 320 | 0 | 0.200 |
| 2 | 256 | 64 | 0.200 |
| 3 | 192 | 128 | 0.200 |
| 4 | 128 | 192 | 0.200 |
| 5 | 64 | 256 | 0.200 |
| 6 | 0 | 320 | 0.200 |

### Simultaneous dissolution kinetics

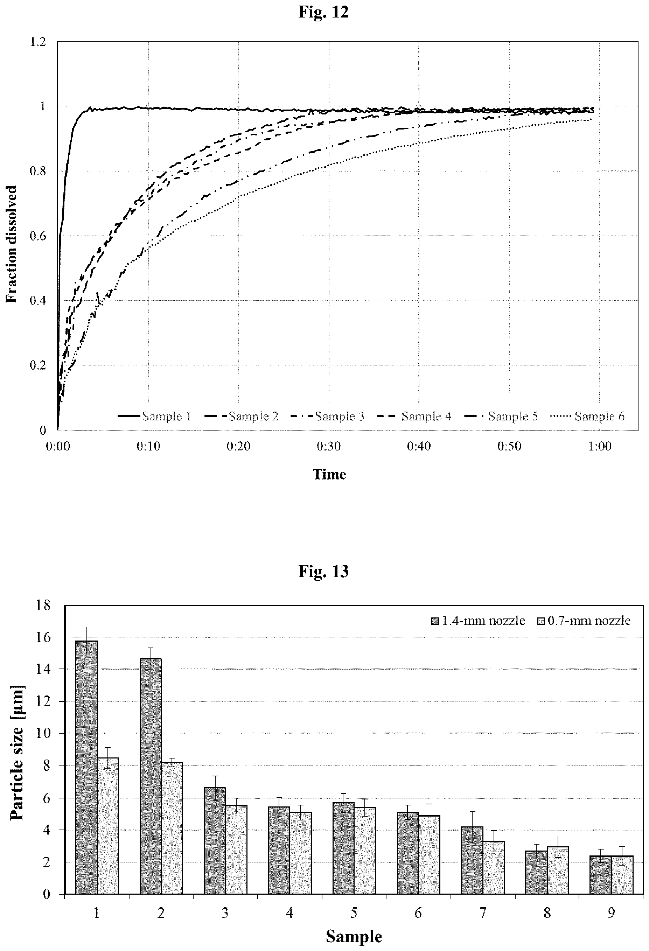

The samples were collected in the autosampler 4 equipped with the simultaneous dissolution testing means. The concentration of 6-Carboxyfluorescein was determined by UV-Vis spectrophotometry using a µDISS Profiler^{™} by Pion Inc. (USA), with maximum absorbance at 496 nm. For that, 20 mL of Phosphate buffer saline (pH 7.4) were added to each sample directly to the collection vessel. The measurements were taken at room temperature with stirring set at 100 rpm. The concentration of 6-Carboxyfluorescein in the medium was determined at 5-s time intervals for a period of up to 60 min. The results reported correspond to the average of triplicates. The dissolution kinetics obtained are shown in Fig. 12. Fastest dissolution kinetics were obtained for the sample with highest lactose content (sample 1). The dissolution kinetics were progressively slower as the concentration of Gum Arabic increased. These results show that sample composition has a considerable influence in dissolution kinetics.

**Example 5** - *Production of samples changing spray drying conditions.*

Total samples produced: 54 (27/run).

Total volume spray dried: 1.548 L/run.

Production time: 5.34 h/run.

Polyvinylpyrrolidone (PVP) samples with different particle sizes were produced by changing the spray drying conditions during production in continuous regimen, using the method and apparatus described in Example 1 of the present invention. For that, measurements of 8 samples with 3 replicates were performed. The dependent variable was particle size, and the independent variables were solution concentration, feed rate, and gas flow rate. The levels of the 3 independent variables are shown in Table 5. Three replicates at the center point were added to enable the independent estimation of the experimental error and to verify the linearity of the factor effects.

**Table 5:**

| Sample | Solution concentration [wt. %] | Feed rate [mL/min] | Gas flow rate [mm] |
|---|---|---|---|
| 1 | 10 | 12 | 30 |
| 2 | 10 | 3.0 | 30 |
| 3 | 10 | 12 | 50 |
| 4 | 10 | 3.0 | 50 |
| 5 | 5.0 | 7.5 | 40 |
| 6 | 0.5 | 12 | 30 |
| 7 | 0.5 | 3.0 | 30 |
| 8 | 0.5 | 12 | 50 |
| 9 | 0.5 | 3.0 | 50 |

The samples were spray dried using a Mini Spray Dryer B-290 from Büchi operated at nitrogen atmosphere and equipped with 2-fluid nozzle (0.7 mm). To produce the samples, stock solutions (10 wt.% PVP dissolved in ethanol, and pure ethanol) were pumped into the spray dryer at appropriate flow rates to achieve the desired concentration.

The experiment was reproduced using a 2-fluid nozzle with larger nozzle diameter (1.4 mm), for a total of 54 samples produced (27 samples with each nozzle).

### Particle size measurements

Particle size distributions were obtained using a Horiba Laser Scattering LA-950v2 instrument. Approximately 10-20 mg of sample were added to 1 mL of cyclohexane in small vials. Prior measurement, each dispersion was homogenized by placing the vial in ultrasonic bath for 3-5 min. Measurements were carried out per triplicates.

Particle sizes obtained for the different samples are shown in Fig. 13. Larger particle sizes were obtained for the samples produced with lower gas flow rate, and higher feed rate and solution concentration. This trend is observed for both nozzles but with a more drastic increase in particle size in the case of the 1.4-mm nozzle. In addition, the standard deviation in all cases was < 1.0 µm. This is considered a low variability, proving that it is possible to produce multiple spray-dried samples in continuous mode with high replicability, using the method and apparatus of the present invention while changing the spray drying conditions.

### Statistical analysis

Data analysis was performed using the Statistica software (version 13.1, StatSoft, USA). Analysis was done separate for each nozzle data set, using analysis of variance (ANOVA) and the individual parameters were evaluated with F test. Results from the ANOVA analysis are summarized in Table 6. The factors with p-values less than the significance level (p-value < α) are highlighted.

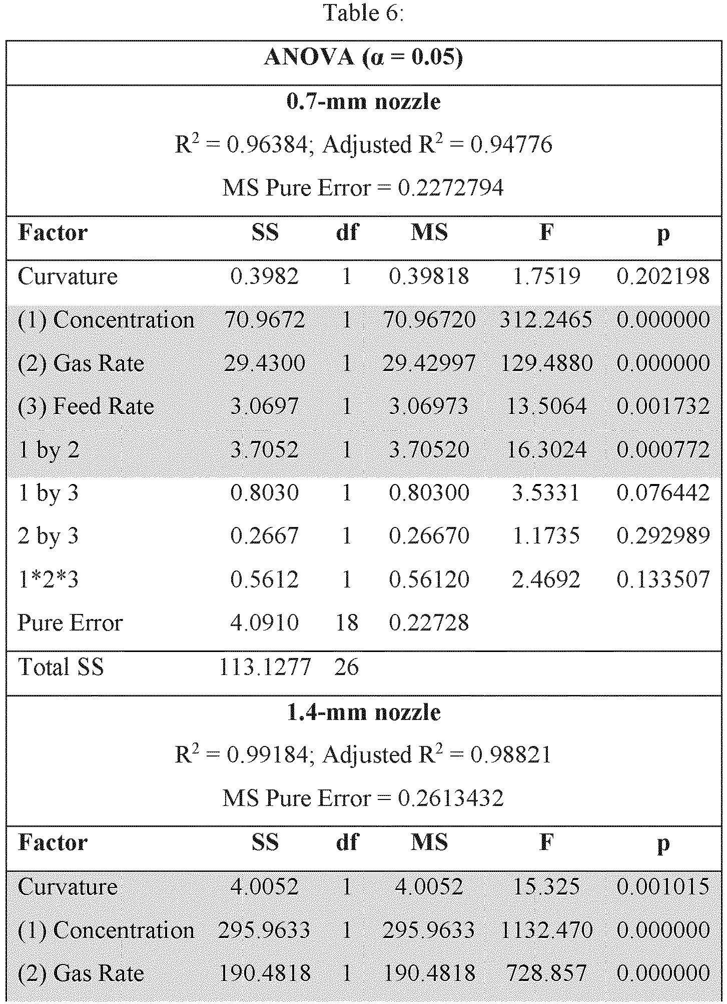

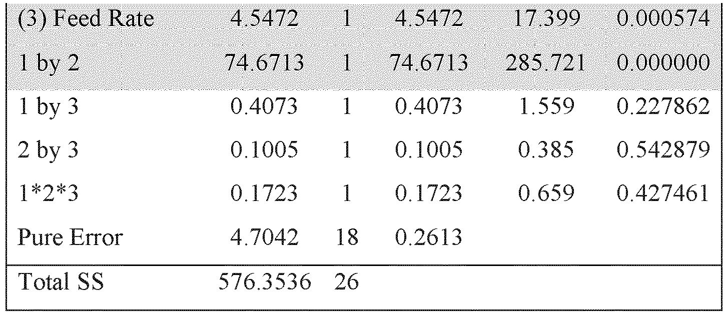

For both nozzles, the ANOVA results indicate that all independent variables (concentration, gas rate and feed rate) have statistically significant effect on the particle size. A significant synergistic interaction between concentration and gas rate was also obtained, implying that, overall, the effect of one of these independent variables depends on the level of the other.

For both nozzles, good adjusted-determination coefficients (R²) were obtained, suggesting that a linear regression model is a good fit for the response surface. However, in the case of the 1.4-mm nozzle, the p-value for curvature is less than the significance level (p-value < α), therefore, at least one factor has a curved relationship with the response, indicating that a quadratic model may be a better fit.

The regression coefficients (Table 7) were also calculated. The sign of the regression coefficient indicates whether the correlation between each independent variable and the dependent variable is positive or negative. From the results obtained it can be concluded that, for both nozzles, as concentration and feed rate increase (positive coefficients), the mean particle size also tend to increase. On the other hand, as gas rate (negative coefficient) decreases, the mean particle size tend to increase. The same tendency applies for the significant interaction between concentration and gas flow rate (negative coefficient).

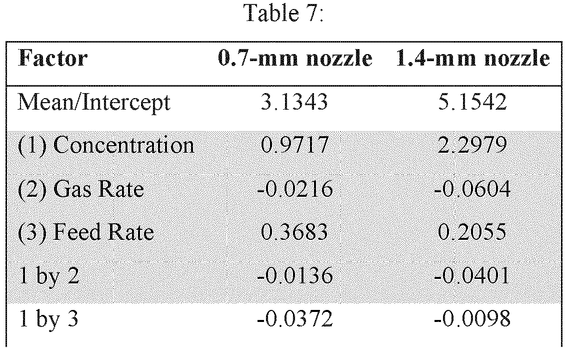

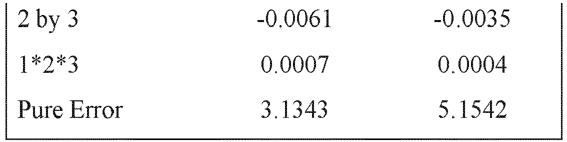

### Dissolution kinetics

Differences in dissolution kinetics due to particle size were evaluated for samples 1 and 9 (smallest and largest particles). For that, samples containing magenta dye were produced and collected in the autosampler 4 equipped with the simultaneous dissolution testing means.

The concentration of magenta dye was determined by UV-Vis spectrophotometry using a µDISS Profiler^{™} by Pion Inc. (USA), with maximum absorbance at 543 nm. 20 mL of Phosphate buffer saline (pH 7.4) were added to each sample. The measurements were taken at room temperature with stirring set at 100 rpm. The concentration of magenta dye in the medium was determined at 5-s time intervals for a period of up to 60 min. The results reported correspond to the average of triplicates.

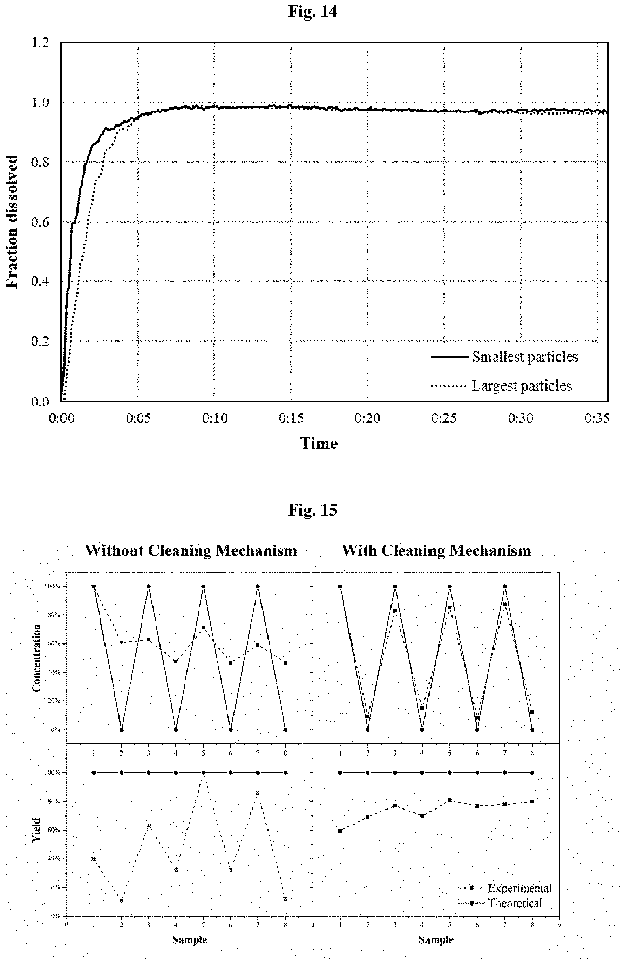

The dissolution kinetics obtained are shown in Fig. 14. Faster dissolution kinetics were obtained for the sample with the smallest particle size (highest surface area). These results prove that particle size can significantly influence dissolution kinetics.

**Example 6** - *Production of samples using cleaning mechanism.*

Total samples produced: 48 (8 per run).

Total volume spray dried: 3.84 L (0.64 L per run).

Production time: 12.8 h (2.1 h per run).

Magenta-dyed lactose samples were prepared by spray drying using the method and apparatus described in Example 1 of the present invention. For that, two aqueous solutions of 1.75 wt.% lactose and 0.24 L in volume were prepared and 480 µL of printer dye (magenta) was added to one of the solutions.

The samples were spray dried using a Mini Spray Dryer B-290 from Büchi operated under air atmosphere and equipped with a 0.7 mm two-fluid nozzle. The solutions of dyed and undyed lactose were introduced alternatingly into the system with the resulting powder being collected. The operating conditions consisted of 130 °C inlet temperature, 55 mm of atomizing gas rate, and a total feed rate of 5.0 mL/min. The outlet temperature was 55-60 °C.

It is well known that smaller particles tend to accumulate more in the walls of the spray dryer, particularly the cyclone separator. The particles that are loosely attached to the walls of the cyclone separator are the main source of sample cross-contamination. Therefore, the spray drying conditions were selected based on preliminary experiments, in which the particles produced had considerably small particles.

The experiment was repeated using the method and apparatus described in Example 1 of the present invention, equipped with the cyclone cleaning mechanism 2 (Fig. 3). During sample production, cyclone was constantly and automatically cleaned according to the cyclone cleaning protocol by introducing pressurized air (7 bar) in tangential direction, via the first connection piece 9. The pressurized air was introduced in pulse mode, using sequences of three 0.5-s pulses with 1.0-s pause between pulses. The pulse sequence was repeated at 1-min intervals.

### Determination of sample composition and cross-contamination

The composition of the samples produced was evaluated using a TECAN Infinite M200Pro spectrophotometer. A known mass of each sample was dissolved in demineralized water and the absorbance of the resulting solutions was measured in the 300 to 800 nm range. The absorption peak of magenta was evaluated at 523 nm. Measurements were done per triplicate.

The first sample of each run (with and without cyclone cleaning mechanism) was taken as a control, since the first sample is not affected by cross-contamination. Considering that the absorbance increases linearly with the concentration of dye, the absorption spectra of each sample was compared to the absorption spectra of the first sample (control). The deviation from the desired concentrations was determined as the absorbance of dye in the sample divided by the absorbance of the first sample (control).

The deviations from the theoretical (desired) compositions, with and without the use of the cleaning mechanism 2, are graphically represented in Fig. 15 and summarized in Table 6:

**Table 6:**

| Sample | Theoretical (desired) magenta concentration [%] | Without cleaning mechanism [%] | With cleaning mechanism [%] |
|---|---|---|---|
| 1 | 100 | 100 | 100 |
| 2 | 0 | 61 ± 11 | 6 ± 6 |
| 3 | 100 | 63 ± 12 | 80 ± 11 |
| 4 | 0 | 47 ± 11 | 17 ± 4 |
| 5 | 100 | 71 ± 22 | 82 ± 4 |
| 6 | 0 | 47 ± 20 | 4 ± 7 |
| 7 | 100 | 59 ± 14 | 91 ± 5 |
| 8 | 0 | 47 ± 18 | 7 ± 10 |

A 3-fold reduction in sample cross-contamination was obtained with the use of the cyclone cleaning mechanism 2 when compared to the cross-contamination in the samples produced without the cyclone cleaning mechanism. These results prove that the cyclone cleaning mechanism 2 significantly reduces the cross-contamination between the particle fractions.

### Determination of spray drying yields

Each collected sample was weighted and the spray drying yields were calculated by dividing the experimental by the theoretical mass of each sample. The deviations from the theoretical (desired) yields, with and without the use of the cleaning mechanism 2, are graphically represented in Fig. 14. The average yield of the samples without the cyclone cleaning mechanism was 47 ± 38 %, whereas the average yield of the samples with the cyclone cleaning mechanism was 72 ± 12 %. These results show that the cyclone cleaning mechanism not only has a significant influence in reducing sample cross-contamination, but also considerably increases the spray drying yields.

### Comparative Example 7 - Production of ternary samples using the device from the background art versus using the present invention

The method and apparatus of the present invention was compared to the device disclosed in the closest prior art (Klimša, V. Continuous spray drying with variable inlet formulation - design and optimization [Master Thesis]. University of Chemistry and Technology Prague, 2018). Different performance factors are evaluated in Table 9. The data provided is based on the production of 15 ternary samples, with 2.5 L of total volume spray dried.

**Table 9**

| Description | Closest prior art | Present invention |
|---|---|---|
| Continuous feeding of multiple components | YES | YES |
| Possibility for feeding of more than 3 components | NO | YES |
| Can operate in the absence of a technician | NO | YES |
| Suitability for production under inert atmosphere | NO | YES |
| Automated sample collection | NO | YES |
| Cyclone cleaning mechanism | NO | YES |
| Possibility for in-situ/simultaneous measurements | NO | YES |
| Capping mechanism | NO | YES |
| Suitability for hazardous materials | NO | YES |
| Cross-contamination between samples | - | Reduced by ≥ 35% |
| Operator time | - | Reduced by 75% |

### Reference signs:

- 1: Inlet pumping station
- 2: Cyclone cleaning mechanism
- 3: Slide valve
- 4: Autosampler
- 5: Analyser
- 6: Control device
- 7: Dosing pump
- 8: Mixer
- 9: First connection piece
- 10: Second connection piece
- 11: Gas valve
- 12: Barrier
- 13: Pneumatic cylinder
- 14: Seal
- 15: Collection vessel
- 16: Carousel
- 17: Weighting scale
- 18: Lifting mechanism
- 19: Collection vessel rack
- 20: Dissolution medium dispenser
- 21: Detecting means

## Claims

1. A device for continuous spray drying with variable inlet composition, **characterized in that** it comprises:
- an inlet pumping station (1), the inlet pumping station (1) comprising
- a mixer (8), the mixer (8) having a plurality of ports, and
- a plurality of dosing pumps (7) configured to being attached to stock solutions of individual components and/or solvents via plurality of ports and via tubing, the dosing pumps (7) being connected to the mixer (8) and configured to measure the exact quantity of liquid components;
- a spray dryer comprising a spray dryer nozzle, a heating coil and a drying chamber, the spray dryer nozzle being connected to the mixer (8) of the inlet pumping station (1) via tubing; and to a source of a drying gas;
- a cyclone separator connected to the outlet of the drying chamber of the spray dryer;
- a filter for filtering the drying gas leaving the cyclone separator, connected to a gas dehumidifier and/or a vapour condenser;
- a cyclone cleaning mechanism (2), comprising a first connection piece (9) placed between the drying chamber of the spray dryer, and the cyclone separator, and a second connection piece (10) placed between the cyclone separator and the filter; wherein each connection piece (9, 10) is connected to a gas valve (11) for connection to a source of pressurized gas; the gas valve (11) being connected to the control device (6) and wherein the first (9) and second (10) connection pieces are configured to direct pressurized gas into the cyclone;
wherein the first connection piece (9) of the cyclone cleaning mechanism (2) comprises an inlet for the pressurized gas configured to direct the gas tangentially into the cyclone, and a temperature sensor;
and wherein the second connection piece (10) of the cyclone cleaning mechanism (2) comprises an inlet for the pressurized gas configured to direct the gas axially into the cyclone;
- a slide valve (3) configured to separate the cyclone separator from a sample collection vessel (15); the slide valve (3) comprising:
- a barrier (12) containing an aperture, configured to switch between an open position and a closed position,
- a switching means for switching the barrier (12) between the open position and the closed position,
- at least two seals (14), one seal (14) positioned between the outlet of the cyclone separator and the slide valve (3) and another seal (14) positioned between the slide valve (3) and the sample collection vessel (15);
- an autosampler (4) for placing a plurality of sample collection vessels (15); the autosampler (4) being configured to lift/lower the sample collection vessels (15) one by one into/from the slide valve (3);
- a control device (6), connected to the inlet pumping station (1), the cyclone cleaning mechanism (2), the slide valve (3), and the autosampler (4).

2. The device according to claim 1, **characterized in that** the switching means of the slide valve (3) is selected from a motor or a pneumatic cylinder (13), the pneumatic cylinder (13) being configured to use pressurized gas to slide the barrier (12) to the open or closed position.

3. The device according to any one of the preceding claims, **characterized in that** the autosampler (4) comprises a carousel (16) for carrying the plurality of sample collection vessels (15), the carousel (16) being rotated by a motor to allow the exchange of sample collection vessels (15); and a weighting scale (17) configured to measure and record the weight of the vessels before and after sample collection.

4. The device according to claim 3, **characterized in that** a carousel conveyor belt is used as the carousel (16) for carrying the sample vessels.

5. The device according to any one of the preceding claims, **characterized in that** it further comprises an analyser (5) for simultaneous analysis of the collected spray-dried samples, the analyser (5) being connected to the control device (6) and to the autosampler (4).

6. The device according to claim 5, **characterized in that** the analyser (5) is selected from the group comprising a dissolution testing means, UV-Vis spectrophotometer, HPLC, X-ray spectrometer, mass spectrometer, NMR spectrometer, Raman spectrometer.

7. The device according to claim 5 or 6, **characterized in that** the analyser (5) is a dissolution testing means for simultaneous dissolution testing of the collected spray-dried samples, wherein the dissolution testing means comprises:
- a collection vessel rack (19) configured to arrange the collection vessels transferred directly from the autosampler (4);
- a dissolution medium dispenser (20) configured to add an exact quantity of dissolution medium to each collection vessel in the collection vessel rack (19);
- a detecting means (21) for detection of the dissolved sample, configured to measure all the samples in the collection vessel rack simultaneously or in a desired sequence.

8. The device according to claim 7, **characterized in that** the detecting means (21) is selected from the group comprising UV-Vis spectrophotometer, HPLC, X-ray spectrometer, mass spectrometer, NMR spectrometer, Raman spectrometer.

9. A method for continuous production of multi-component powders by spray drying, **characterized in that** it comprises the following steps:
i) providing the device according to any one of the preceding claims 1 to 8; providing solutions to be spray dried in storage containers connected to the inlet pumping station (1) via tubings; wherein at least one of the storage containers contains a pure solvent; placing at least one clean collection vessel (15) in the autosampler (4) and connecting it to the slide valve (3);
ii) the input data are provided to create a spray drying protocol by the control device (6); the input data being selected from the group comprising number of components, sample compositions, total and partial inlet feed flowrate, total volume per sample, number of samples, drying time, cleaning time;
iii) optionally, the input data are provided to create a cyclone cleaning protocol by the control device (6); the input data being selected from the group comprising continuous or pulse mode of the pressurized gas inlet via first and second connection piece (9, 10); tangential and/or axial direction of the pressurized gas inlet; drying time; cleaning time;
iv) the slide valve (3) switches into an open position and the inlet pumping station (1) retrieves the spray drying protocol from the control device (6), and pumps the desired quantity of each storage solution into the mixer (8) and the mixer (8) dispenses a measured quantity of the solution mixture to be spray dried into the nozzle;
v) the solution mixture is spray dried during a predetermined drying time according to the spray drying protocol;
vi) the inlet pumping station (1) stops pumping the storage solutions into the mixer (8), and starts pumping the pure solvent into the mixer, which dispenses a measured quantity of the pure solvent into the nozzle during a predetermined cleaning time according to the spray drying protocol;
vii) optionally, pressurized gas enters the cyclone via the gas valve (11) and the connection pieces (9, 10), during a predetermined drying time; optionally, this step is preceded by retrieving the cyclone cleaning protocol the gas valve (11); the pressurized gas then enter the cyclone via the connection pieces (9, 10), during a predetermined drying time according to the cyclone cleaning protocol;
viii) the inlet pumping station (1) stops pumping the pure solvent into the mixer, and the slide valve (3) closes;
ix) the collection vessel (15) containing the spray dried sample is disconnected from the slide valve (3), and the autosampler (4) moves by one position to place and connect a clean collection vessel (15) to the slide valve (3);
x) optionally, the spray dried sample from the collection vessel (15) is analyzed using the analyser (5);
xi) repeating steps iv) to x) until all desired samples are spray dried.

10. The method according to claim 9, **characterized in that** the device in step i) comprises the dissolution testing means according to claim 7 for simultaneous dissolution testing of the collected spray-dried samples,
and in step x) wherein each collection vessel (15) containing the spray dried sample is transferred to the collection vessel rack (19), the dissolution medium dispenser (20) adds an exact quantity of dissolution medium to each collection vessel (15) in the collection vessel rack (19); and the detecting means (21) measures the quantity of the dissolved sample in each of the collection vessel (15) in the collection vessel rack (19).

11. A computer program comprising instructions to cause the device of any one of claims 1 to 8 to execute the steps of the method of claim 9 or 10.

12. Use of the device according to any one of the preceding claims 1 to 8 for continuous spray drying, preferably in pharmaceutical industry.

13. Use of the device according to any one of the preceding claims 1 to 8 or of the method according claim 9 or 10, for screening for the formulation of amorphous solid dispersions, preferably in the pharmaceutical industry.

## Patentansprüche

1. Vorrichtung zur kontinuierlichen Sprühtrocknung mit variabler Zulaufzusammensetzung, **dadurch gekennzeichnet, dass** sie umfasst:
- eine Einlasspumpstation (1), wobei die Einlasspumpstation (1) umfasst
- einen Mischer (8), wobei der Mischer (8) eine Vielzahl von Anschlüssen aufweist, und
- mehrere Dosierpumpen (7), die dazu konfiguriert sind, an Stammlösungen einzelner Komponenten und/oder Lösungsmittel über mehrere Anschlüsse und über Schläuche angeschlossen zu werden, wobei die Dosierpumpen (7) mit dem Mischer (8) verbunden sind und zum die genaue Menge flüssiger Komponenten zu messen konfiguriert sind;
- einen Sprühtrockner, der eine Sprühtrocknerdüse, eine Heizschlange und eine Trocknungskammer umfasst, wobei die Sprühtrocknerdüse über eine Rohrleitung mit dem Mischer (8) der Einlasspumpstation (1) verbunden ist; und zu einer Quelle eines Trocknungsgases verbunden ist;
- einen Zyklonabscheider, der mit dem Ausgang der Trocknungskammer des Sprühtrockners verbunden ist;
- einen Filter zum Filtern des den Zyklonabscheider verlassenden Trocknungsgases, verbunden mit einem Gasentfeuchter und/oder einem Dampfkondensator;
- einen Zyklonreinigungsmechanismus (2), umfassend ein erstes Verbindungsstück (9), das zwischen der Trocknungskammer des Sprühtrockners und dem Zyklonabscheider angeordnet ist, und ein zweites Verbindungsstück (10), das zwischen dem Zyklonabscheider und dem Filter angeordnet ist; wobei jedes Verbindungsstück (9, 10) mit einem Gasventil (11) zum Anschluss an eine Druckgasquelle verbunden ist; wobei das Gasventil (11) mit der Steuervorrichtung (6) verbunden ist und wobei das erste (9) und das zweite (10) Verbindungsstück konfiguriert sind, um unter Druck stehendes Gas in den Zyklon zu leiten;
wobei das erste Verbindungsstück (9) des Zyklonreinigungsmechanismus (2) einen Einlass für das unter Druck stehende Gas, der konfiguriert ist, um das Gas tangential in den Zyklon zu leiten, und einen Temperatursensor umfasst;
und wobei das zweite Verbindungsstück (10) des Zyklonreinigungsmechanismus (2) einen Einlass für das unter Druck stehende Gas umfasst, der konfiguriert ist, um das Gas axial in den Zyklon zu leiten;
- ein Schieberventil (3), das konfiguriert ist, um den Zyklonabscheider von einem Probensammelbehälter (15) zu trennen; wobei der Schieberventil (3) umfasst:
- eine Barriere (12), die eine Öffnung enthält, die so konfiguriert ist, dass sie zwischen einer offenen Position und einer geschlossenen Position umschaltet,
- ein Schaltmittel zum Umschalten die Barriere (12) zwischen der offenen Position und der geschlossenen Position,
- mindestens zwei Dichtungen (14), eine Dichtung (14) zwischen dem Auslass des Zyklonabscheiders und dem Schieberventil (3) und eine andere Dichtung (14) zwischen dem Schieberventil (3) und dem Probensammelbehalter (15);
- einen Autosampler (4) zum Platzieren einer Vielzahl von Probensammelbehälter (15); wobei der Autosampler (4) so konfiguriert ist, dass er die Probensammelbehälter (15) eines nach dem anderen in das/vom Schieberventil (3) hebt/senkt;
- eine Steuervorrichtung (6), die mit der Einlasspumpstation (1), dem Zyklonreinigungsmechanismus (2), dem Schieberventil (3) und dem Autosampler (4) verbunden ist.

2. Vorrichtung nach Anspruch 1, **dadurch gekennzeichnet, dass** das Schaltmittel des Schieberventils (3) aus einem Motor oder einem Pneumatikzylinder (13) ausgewählt ist, wobei der Pneumatikzylinder (13) so konfiguriert ist, dass er Druckgas zum schieben die Barriere (12) in die offene oder geschlossene Position verwendet.

3. Vorrichtung nach einem der vorhergehenden Ansprüche, **dadurch gekennzeichnet, dass** der Autosampler (4) ein Karussell (16) zum Tragen der Vielzahl von Probensammelbehälter (15) umfasst, wobei das Karussell (16) von einem Motor gedreht wird, um den Austausch von Probensammelbehälter (15) zu ermöglichen; und eine Waage (17), die so konfiguriert ist, dass sie das Gewicht der Probensammelbehälter vor und nach der Probenentnahme misst und aufzeichnet.

4. Vorrichtung nach Anspruch 3, **dadurch gekennzeichnet, dass** als Karussell (16) zum Tragen der Probensammelbehälter ein Karussellförderband verwendet wird.

5. Vorrichtung nach einem der vorhergehenden Ansprüche, **dadurch gekennzeichnet, dass** sie ferner einen Analysator (5) zur gleichzeitigen Analyse der gesammelten sprühgetrockneten Proben umfasst, wobei der Analysator (5) mit der Steuervorrichtung (6) und dem Autosampler (4) verbunden ist.

6. Vorrichtung nach Anspruch 5, **dadurch gekennzeichnet, dass** der Analysator (5) ausgewählt ist aus der Gruppe bestehend aus Auflösungstesteinrichtung, UV-Vis-Spektrophotometer, HPLC, Röntgenspektrometer, Massenspektrometer, NMR-Spektrometer, Raman-Spektrometer.

7. Vorrichtung nach Anspruch 5 oder 6, **dadurch gekennzeichnet, dass** der Analysator (5) ein Auflösungstestmittel zum simultanen Auflösungstesten der gesammelten sprühgetrockneten Proben ist, wobei das Auflösungstestmittel umfasst:
- ein Sammelbehältergestell (19), das konfiguriert ist, um die Sammelbehälter anzuordnen, die direkt von dem Autosampler (4) übertragen werden;
- einen Auflösungsmediumspender (20), der so konfiguriert ist, dass er jedem Sammelbehälter im Sammelbehältergestell (19) eine exakte Menge Auflösungsmedium hinzufügt;
- ein Erfassungsmittel (21) zum Erfassen der gelösten Probe, das konfiguriert ist, um alle Proben in dem Sammelbehältergestell gleichzeitig oder in einer gewünschten Reihenfolge zu messen.

8. Vorrichtung nach Anspruch 7, **dadurch gekennzeichnet, dass** die Detektionseinrichtung (21) ausgewählt ist aus der Gruppe umfassend UV-Vis-Spektrophotometer, HPLC, Röntgenspektrometer, Massenspektrometer, NMR-Spektrometer, Raman-Spektrometer.

9. Verfahren zur kontinuierlichen Herstellung von Mehrkomponentenpulvern durch Sprühtrocknung, **dadurch gekennzeichnet, dass** es folgende Schritte umfasst:
i) Bereitstellen der Vorrichtung nach einem der vorhergehenden Ansprüche 1 bis 8; Bereitstellen von zu sprühtrocknenden Lösungen in Vorratsbehältern, die über Schläuche mit der Einlasspumpstation (1) verbunden sind; wobei mindestens einer der Vorratsbehälter ein reines Lösungsmittel enthält; Platzieren mindestens eines sauberen Sammelbehälters (15) im Autosampler (4) und Verbinden desselben mit dem Schieberventil (3);
ii) die Eingabedaten zur Erstellung eines Sprühtrocknungsprotokolls von der Steuervorrichtung (6) bereitgestellt werden; wobei die Eingabedaten aus der Gruppe ausgewählt sind, die die Anzahl der Komponenten, Probenzusammensetzungen, Gesamt- und Teileinlasszulaufflussrate, Gesamtvolumen pro Probe, Anzahl der Proben, Trocknungszeit, Reinigungszeit umfasst;
iii) gegebenenfalls werden die Eingabedaten zur Erstellung eines Zyklonreinigungsprotokolls durch die Steuervorrichtung (6) bereitgestellt; wobei die Eingangsdaten ausgewählt sind aus der Gruppe bestehend aus kontinuierlichem oder gepulstem Betrieb des Druckgaseinlasses über ersten und zweiten Verbindungsstücken (9, 10); tangentiale und/oder axiale Richtung des Druckgaseinlasses; Trockenzeit; Reinigungszeit;
iv) das Schieberventil (3) schaltet in eine offene Position und die Einlasspumpstation (1) ruft das Sprühtrocknungsprotokoll von der Steuervorrichtung (6) ab und pumpt die gewünschte Menge jeder Stammlösung in den Mischer (8) und der Mischer (8) gibt eine abgemessene Menge der zu sprühtrocknenden Lösungsmischung in die Düse ab;
v) das Lösungsmischung wird während einer vorbestimmten Trocknungszeit gemäß dem Sprühtrocknungsprotokoll sprühgetrocknet;
vi) die Einlasspumpstation (1) stoppt das Pumpen der Stammlösungen in den Mischer (8) und beginnt mit dem Pumpen des reinen Lösungsmittels in den Mischer, der eine abgemessene Menge des reinen Lösungsmittels in die Düse während einer vorbestimmten Reinigungszeit entsprechend abgibt das Sprühtrocknungsprotokoll;
vii) gegebenenfalls tritt Druckgas während einer vorgegebenen Trocknungszeit über das Gasventil (11) und die Verbindungsstücke (9, 10) in den Zyklon ein; optional geht diesem Schritt das Abrufen des Zyklon-Reinigungsprotokolls des Gasventils (11) voraus; das unter Druck stehende Gas tritt dann über die Verbindungsstücke (9, 10) in den Zyklon ein, während einer vorbestimmten Trocknungszeit gemäß dem Zyklon-Reinigungsprotokoll;
viii) die Einlasspumpstation (1) stoppt das Pumpen des reinen Lösungsmittels in den Mischer und das Schieberventil (3) schließt;
ix) das Sammelbehälter (15), das die sprühgetrocknete Probe enthält, wird vom Schieberventil (3) getrennt, und der Autosampler (4) bewegt sich um eine Position, um ein sauberes Sammelbehälter (15) zu platzieren und mit dem Schieberventil (3) zu verbinden;
x) gegebenenfalls wird die sprühgetrocknete Probe aus dem Sammelbehälter (15) unter Verwendung des Analysators (5) analysiert;
xi) Wiederholen der Schritte iv) bis x), bis alle gewünschten Proben sprühgetrocknet sind.

10. Verfahren nach Anspruch 9, **dadurch gekennzeichnet, dass** die Vorrichtung in Schritt i) das Auflösungstestmittel nach Anspruch 7 zum simultanen Auflösungstesten der gesammelten sprühgetrockneten Proben umfasst,
und in Schritt x), wobei jedes Sammelbehälter (15), das die sprühgetrocknete Probe enthält, zu dem Sammelbehältergestell (19) transferiert wird, der Auflösungsmediumspender (20) zu jedem Sammelbehälter (15) in dem Sammelbehältergestell (19) eine exakte Menge Auflösungsmedium hinzufügt; und die Erfassungseinrichtung (21) die Menge der gelösten Probe in jedem der Sammelbehälter (15) in dem Sammelbehältergestell (19) misst.

11. Computerprogramm, das Anweisungen umfasst, um die Vorrichtung nach einem der Ansprüche 1 bis 8 zu veranlassen, die Schritte des Verfahrens nach Anspruch 9 oder 10 auszuführen.

12. Verwendung der Vorrichtung nach einem der vorhergehenden Ansprüche 1 bis 8 zur kontinuierlichen Sprühtrocknung, vorzugsweise in der pharmazeutischen Industrie.

13. Verwendung der Vorrichtung nach einem der vorhergehenden Ansprüche 1 bis 8 oder des Verfahrens nach Anspruch 9 oder 10, zum Screening zur Formulierung von amorphen Feststoffdispersionen, vorzugsweise in der pharmazeutischen Industrie.

## Revendications

1. Un dispositif de séchage continu par pulvérisation à composition d'entrée variable, **caractérisé en ce qu'**il comprend:
- une station (1) de pompage d'entrée, la station (1) de pompage d'entrée comprenant
- un mélangeur (8), le mélangeur (8) ayant une pluralité de ports, et
- une pluralité de pompes (7) doseuses configurées pour être connectées à des solutions mères de composants individuels et/ou de solvants via une pluralité d'orifices et via des tubulures, les pompes (7) doseuses étant connectées au mélangeur (8) et configurées pour mesurer la quantité exacte de composants liquides;
- un sécheur par pulvérisation comprenant une buse de sécheur, un serpentin de chauffage et une chambre de séchage, la buse de sécheur étant reliée au mélangeur (8) de la station de pompage (1) d'entrée via une tubulure; et à une source d'un gaz de séchage;
- un séparateur cyclone relié à la sortie de la chambre de séchage de sécheur par pulvérisation;
- un filtre pour filtrer le gaz de séchage sortant du séparateur cyclone, relié à un déshumidificateur de gaz et/ou à un condenseur de vapeur;
- un mécanisme (2) de nettoyage du cyclone, comprenant une première pièce (9) de liaison placée entre la chambre de séchage du sécheur par pulvérisation, et le séparateur cyclone, et une deuxième pièce (10) de liaison placée entre le séparateur cyclone et le filtre; dans lequel chaque pièce (9, 10) de connexion est connectée à une vanne (11) de gaz pour connexion à une source de gaz sous pression; la vanne (11) de gaz étant connectée au dispositif (6) de commande et dans laquelle les première (9) et deuxième (10) pièces de connexion sont configurées pour diriger du gaz sous pression dans le cyclone;
dans lequel la première pièce (9) de connexion du mécanisme (2) de nettoyage du cyclone comprend une entrée pour le gaz sous pression configurée pour diriger le gaz tangentiellement dans le cyclone, et un capteur de température;
et dans lequel la deuxième pièce (10) de connexion du mécanisme (2) de nettoyage du cyclone comprend une entrée pour le gaz sous pression configurée pour diriger le gaz axialement dans le cyclone;
- une vanne (3) coulissante configurée pour séparer le séparateur cyclone d'un récipient (15) de collecte d'échantillon; le vanne (3) coulissante comprenant:
- une barrière (12) contenant une ouverture, configurée pour basculer entre une position ouverte et une position fermée,
- un moyen de commutation pour commuter la barrière (12) entre la position ouverte et la position fermée,
- au moins deux joints (14), un joint (14) positionné entre la sortie du séparateur cyclone et la vanne (3) coulissante; et un autre joint (14) positionné entre la vanne (3) coulissante et le récipient (15) de collecte d'échantillon;
- un échantillonneur automatique (4) pour placer une pluralité de récipients (15) de collecte d'échantillons; l'échantillonneur automatique (4) étant configuré pour soulever/abaisser les récipients (15) de collecte d'échantillons un par un dans/depuis la vanne (3) coulissante;
- un dispositif (6) de commande, relié à la station (1) de pompage d'entrée, au mécanisme (2) de nettoyage du cyclone, à la vanne (3) coulissante et à l'échantillonneur automatique (4).

2. Le dispositif selon la revendication 1, **caractérisé en ce que** le moyen de commutation de la vanne (3) coulissante est choisi parmi un moteur ou un vérin (13) pneumatique, le vérin (13) pneumatique étant configuré pour utiliser du gaz sous pression pour faire coulisser la barrière (12) en position ouverte ou fermée.

3. Le dispositif selon l'une quelconque des revendications précédentes, **caractérisé en ce que** le échantillonneur automatique (4) comprend un carrousel (16) pour porter la pluralité de récipients (15) de collecte d'échantillons, le carrousel (16) étant entraîné en rotation par un moteur pour permettre l'échange de récipients (15) de collecte d'échantillons; et une balance (17) configurée pour mesurer et enregistrer le poids des récipients avant et après le prélèvement d'échantillons.

4. Le dispositif selon la revendication 3, **caractérisé en ce qu'**une bande transporteuse à carrousel est utilisée comme carrousel (16) pour transporter les récipients d'échantillon.

5. Le dispositif selon l'une quelconque des revendications précédentes, **caractérisé en ce qu'**il comprend en outre un analyseur (5) pour l'analyse simultanée des échantillons séchés par pulvérisation collectés, l'analyseur (5) étant relié au dispositif (6) de commande et à l'échantillonneur automatique (4).

6. Le dispositif selon la revendication 5, **caractérisé en ce que** l'analyseur (5) est choisi dans le groupe comprenant un moyen de test de dissolution, spectrophotomètre UV-Vis, HPLC, spectromètre des rayons X, spectromètre de masse, spectromètre RMN, spectromètre Raman.

7. Le dispositif selon la revendication 5 ou 6, **caractérisé en ce que** l'analyseur (5) est un moyen de test de dissolution pour tester simultanément la dissolution des échantillons séchés par pulvérisation collectés, dans lequel le moyen de test de dissolution comprend:
- un râtelier (19) de récipients de collecte configuré pour ranger les récipients de collecte transférés directement depuis l'échantillonneur automatique (4);
- un distributeur (20) de milieu de dissolution configuré pour ajouter une quantité exacte de milieu de dissolution à chaque récipient de collecte dans le râtelier (19) de récipients de collecte;
- un moyen (21) de détection pour la détection de l'échantillon dissous, configuré pour mesurer tous les échantillons dans le râtelier de récipients de collecte simultanément ou dans une séquence souhaitée.

8. Le dispositif selon la revendication 7, **caractérisé en ce que** le moyen (21) de détection est choisi dans le groupe comprenant spectrophotomètre UV-Vis, HPLC, spectromètre des rayons X, spectromètre de masse, spectromètre RMN, spectromètre Raman.

9. Un procédé de production continue de poudres multi-composants par séchage par pulvérisation, **caractérisé en ce qu'**il comprend les étapes suivantes:
i) fournir le dispositif selon l'une quelconque des revendications précédentes 1 à 8; fournir des solutions à sécher par pulvérisation dans des récipients de stockage reliés à la station (1) de pompage d'entrée via des tubulures; dans lequel au moins un des récipients de stockage contient un solvant pur; placer au moins un récipient (15) de collecte propre dans l'échantillonneur automatique (4) et le connecter à la vanne (3) coulissante;
ii) les données d'entrée sont fournies pour créer un protocole de séchage par pulvérisation par le dispositif (6) de commande; les données d'entrée étant sélectionnées dans le groupe comprenant le nombre de composants, les compositions d'échantillons, le débit d'alimentation d'entrée total et partiel, le volume total par échantillon, le nombre d'échantillons, le temps de séchage, le temps de nettoyage;
iii) éventuellement, les données d'entrée sont fournies pour créer un protocole de nettoyage de cyclone par le dispositif (6) de commande; les données d'entrée étant sélectionnées dans le groupe comprenant le mode continu ou impulsionnel de l'entrée de gaz sous pression via des première et deuxième pièces de connexion (9, 10); direction tangentielle et/ou axiale de l'entrée de gaz sous pression; temps de séchage; temps de nettoyage;
iv) la vanne (3) coulissante passe en position ouverte et la station (1) de pompage d'entrée récupère le protocole de séchage par pulvérisation du dispositif (6) de commande, et pompe la quantité souhaitée de chaque solution de stockage dans le mélangeur (8) et le mélangeur (8) distribue une quantité mesurée du mélange de solution à sécher par pulvérisation dans la buse;
v) le mélange de solution est séché par pulvérisation pendant un temps de séchage prédéterminé selon le protocole de séchage par pulvérisation;
vi) la station (1) de pompage d'entrée arrête de pomper les solutions de stockage dans le mélangeur (8), et commence à pomper le solvant pur dans le mélangeur, qui distribue une quantité mesurée du solvant pur dans la buse pendant un temps de nettoyage prédéterminé selon le protocole de séchage par pulvérisation;
vii) éventuellement, du gaz sous pression entre dans le cyclone via la vanne (11) de gaz et les pièces de connexion (9, 10), pendant un temps de séchage prédéterminé; éventuellement, cette étape est précédée par la récupération du protocole de nettoyage de cyclone de la vanne gaz (11); le gaz sous pression pénètre alors dans le cyclone par les pièces de connexion (9, 10), pendant un temps de séchage prédéterminé selon le protocole de nettoyage du cyclone;
viii) la station (1) de pompage d'entrée arrête de pomper le solvant pur dans le mélangeur, et la vanne (3) coulissante se ferme;
ix) le récipient (15) de collecte contenant l'échantillon séché par pulvérisation est déconnecté de la vanne (3) coulissante, et l'échantillonneur automatique (4) se déplace d'une position pour placer et connecter un récipient (15) de collecte propre à la vanne (3) coulissante;
x) éventuellement, l'échantillon séché par pulvérisation provenant du récipient (15) de collecte est analysé à l'aide de l'analyseur (5);
xi) répéter les étapes iv) à x) jusqu'à ce que tous les échantillons souhaités soient séchés par pulvérisation.

10. Le procédé selon la revendication 9, **caractérisé en ce que** le dispositif à l'étape i) comprend le moyen de test de dissolution pour tester simultanément la dissolution des échantillons séchés par pulvérisation collectés,
et à l'étape x) dans laquelle chaque récipient (15) de collecte contenant l'échantillon séché par pulvérisation est transféré sur le râtelier (19) de récipients de collecte, le distributeur (20) de milieu de dissolution ajoute une quantité exacte de milieu de dissolution à chaque récipient (15) de collecte dans le râtelier (19) de récipient de collecte; et le moyens (21) de détection mesure la quantité de l'échantillon dissous dans chacun des récipient (15) de collecte dans le râtelier (19) de récipient de collecte.

11. Un programme d'ordinateur comprenant des instructions pour amener le dispositif de l'une quelconque des revendications 1 à 8 à exécuter les étapes du procédé de la revendication 9 ou 10.

12. Utilisation du dispositif selon l'une quelconque des revendications précédentes 1 à 8 pour séchage continu par pulvérisation, de préférence dans l'industrie pharmaceutique.

13. Utilisation du dispositif selon l'une quelconque des revendications précédentes 1 à 8 ou du procédé selon la revendication 9 ou 10, pour le dépistage pour la formulation de dispersions solides amorphes, de préférence dans l'industrie pharmaceutique.
